# EUROPEAN PATENT APPLICATION

(11) **EP 4 080 647 A1**
(43) Date of publication of application: **26.10.2022**
(21) Application number: 21169828.7
(22) Date of filing: 22.04.2021
(51) Int. Cl.: H01M 12/06

(54) **ELECTRODE MODULE, ELECTROCHEMICAL CELL, BATTERY, AND MANUFACTURE AND USE THEREOF**

(71) Applicant: HILABS GmbH, 70565 Stuttgart (DE)
(72) Inventor: Haq, Manan, 70569 Stuttgart (DE)
(74) Representative: Meyer zu Bexten, Elmar

(57) **Abstract**

To achieve higher voltages in a metal-air electrochemical battery, several cells must be interconnected to form a modular unit known in the art as a "stack". These cells need to be filled one by one, which poses a major challenge as it results in uneven filling and thus differences in cell capacity. In a larger stack of several thousand cells, this may increase the time required for filling. Moreover, monitoring the fill level of all cells represents a significant issue.

Further, the manufacturing of each cell involves numerous components to be assembled, requiring complex fabrication processes that are inherently inaccurate, error-prone, and expensive. Specifically, the cells need to be sealed against electrolyte leakage, encompassing a laborious joining procedure. Disparate materials of varying porosity and surface finish complicate this sealing process. The batteries resulting from such manufacture tend to be susceptible to faults whose diagnosis is often problematic: Failure of any one cell in the stack will cause the entire system to fail, entailing a cumbersome identification of the defective component.

Solution

Electrode module (EM) for an electrochemical cell,
the module (EM) having a frame (11),
characterized in
a cathode (12), preferably integral with the frame (11), for maintaining an ion flow through an electrolyte in a compartment of the cell.

## Description

### Technical Field

The invention relates to the product and processes as per the first portion of the independent claims.

### Background Art

A metal-air electrochemical cell uses an anode made from pure metal and a so-called air cathode or air electrode, typically with an aqueous or aprotic electrolyte. During discharge of such cell, a reduction reaction occurs in the cathode while the metal anode is oxidized.

The open-circuit voltage of a metal-air cell depends on the material of the anode. For instance, a zinc-air cell produces a theoretical electrode voltage of 1.65 V, which is reduced at least to 1.45 V in known cells (cf. NPL1).

PTL1 discloses an electrode module for a conventional fuel cell.

### Summary of invention

The invention is set out in the appended set of claims.

### Technical Problem

To achieve higher voltages, several cells must be interconnected to form a modular unit known in the art as a "stack". These cells need to be filled one by one, which poses a major challenge as it results in uneven filling and thus differences in cell capacity. In a larger stack of several thousand cells, this may increase the time required for filling. Moreover, monitoring the fill level of all cells represents a significant issue.

Further, the manufacturing of each cell involves numerous components to be assembled, requiring complex fabrication processes that are inherently inaccurate, error-prone, and expensive. Specifically, the cells need to be sealed against electrolyte leakage, encompassing a laborious joining procedure. Disparate materials of varying porosity and surface finish complicate this sealing process.

The batteries resulting from such manufacture tend to be susceptible to faults whose diagnosis is often problematic: Failure of any one cell in the stack will cause the entire system to fail, entailing a cumbersome identification of the defective component.

### Solution to Problem

The problem is solved as per the second portion of Claim 1.

### Advantage ous effect of invention

Electrode modules as per the invention may be inserted into a container such as a trough or tank to form - upon charging the container with a suitable electrolyte - a battery of galvanic cells. In such manufacturing process, the reduced complexity and number of parts allow for a higher degree of automation, increasing both reliability and economic viability.

Preferably, the compartments of said cells may be fluidically interconnected through a valve. This way, all cells can be flooded simultaneously, reducing the filling effort. In a corresponding embodiment, leakage of any cell may be compensated by means of the valve until the electrolyte is leveled across the container, with only one among the cells needing to be monitored at any time.

In the preferred variant of a metal-air battery, once the cells are conjoined within their container, the mating surfaces of the air electrodes and frames constitute the only sealing surfaces, greatly improving reliability of the overall system.

Advantageously, the anode and cathode of each electrode module in a battery can be electrically interconnected using a conductive grille. When such modules are embedded in the electrolyte, the resulting cells form a serial connection, thereby minimizing the wiring requirements of the battery.

### Brief description of drawings

Figure 1 shows an electrode module.
Figure 2 shows a battery.

### Description of embodiments

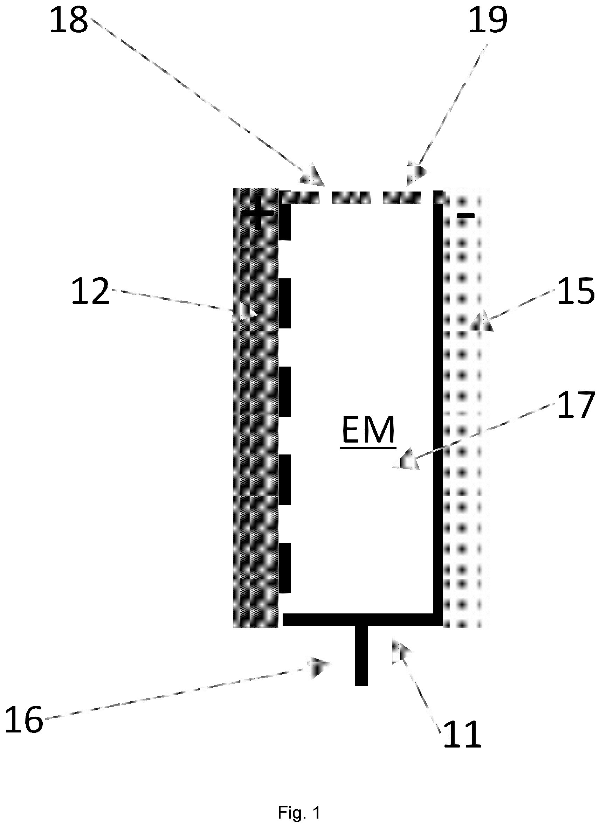

The electrode module (EM) of Figure 1 essentially consists of a frame (11) with an integral cathode (12) and anode (15). Since - as will be discussed below - the cathode (12) and anode (15) are intended to maintain an ion flow in *differentcells*, the module (EM) per se fails the definition of a galvanic cell. Yet, it may serve as a basic building block of such cell or battery. For this purpose, an integral sealing wall (16) confines the ion flow to a single compartment of the battery.

In the present embodiment, the cathode (12) is in fluid communication with an air chamber (17) formed between the zinc anode (15) and cathode (12), the latter thus taking the form of an air electrode. A metallic and thus conductive grille (19) covers the associated air vent (18) opposite the sealing wall (16), electrically interconnecting the cathode (12) and the anode (15).

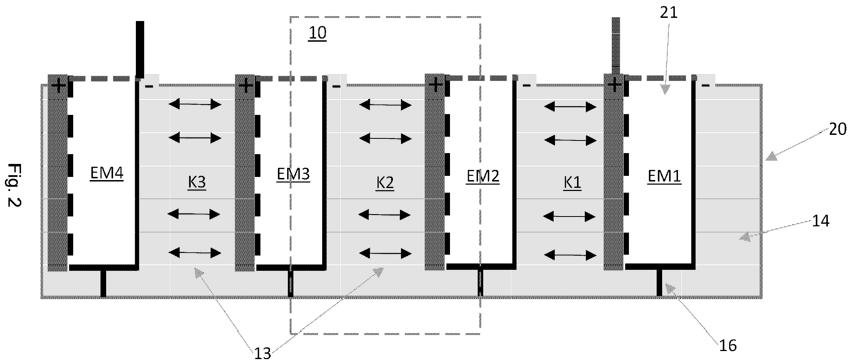

To manufacture the three-cell zinc-air battery of Figure 2, four electrode modules (EM1, EM2, EM3, EM4) as illustrated in Figure 1 have been inserted into a trough such that the vents (18) open up outside the container (20). In the resulting configuration, each cell (10) is formed by two adjacent modules, the resulting compartment of the battery being delimited by the zinc anode of the left module and the air cathode of the right module. With the modules (EM, EM1, EM2, EM3, EM4) inserted and a valve (not depicted) fluidically interconnecting the compartments (K1, K2, K3), the container (20) has been charged with an electrolyte (14) in the form of an aqueous alkaline solution, saturating the anode of each compartment.

Since every two adjacent cells are electrically connected via the grille of the module therebetween, when the terminals of the battery are connected and its air chambers vented, the air entering the cathodes, sustains the ion flow (13) by oxidizing the electrolyte (14) while the anodes gradually degenerate. The resulting discharge current that compensates the internal ion flow (13) may be used to power an electrical load. By way of example, in the present serial connection of three cells (10), an open-circuit voltage over 4 V may be attained.

Where the air cathode is bi-functional, the battery may conversely be supplied with a charge current, such as from a wind turbine or photo-voltaic module, reversing the ion flow (13) and regenerating the anodes.

### Industrial applicability

The invention is applicable, among others, throughout the electricity and manufacturing industries.

### Reference signs list

- EM, EM1, EM2, EM3, EM4: Electrode module
- K1, K2, K3: Compartment
- 10: Zinc-air cell
- 11: Frame
- 12: Air cathode
- 13: Ion flow
- 14: Electrolyte
- 15: Zinc anode
- 16: Sealing wall
- 17: Air chamber
- 18: Air vent
- 19: Metallic grille
- 20: Container
- 21: Oxygen from air

### Citation list

The following documents are cited hereinbefore.

### Patent I iterature

PTL1: WO 2014/198364 A (FREUDENBERG CARL KG [DE]) 18.12.2014

### Non-patent literature

NPL1: SAPKOTA, Prabal, et al. Zinc-air fuel cell, a potential candidate for alternative energy. Journal of Industrial and Engineering Chemistry. 2009, vol.15, no.4, p.445-450.

## Claims

1. Electrode module (EM, EM1, EM2, EM3, EM4) for an electrochemical cell (10), the module (EM, EM1, EM2, EM3, EM4) having a frame (11),
**characterized in**
a cathode (12), preferably integral with the frame (11), for maintaining an ion flow (13) through an electrolyte (14) in a compartment (K1, K2, K3) of the cell (10).

2. Module (EM, EM1, EM2, EM3, EM4) as per Claim 1
**characterized in**
an anode (15), preferably integral with the frame (11), for maintaining the ion flow (13) through the electrolyte (14) in a further compartment (K1, K2, K3) of an adjacent cell (10).

3. Module (EM, EM1, EM2, EM3, EM4) as per Claim 2
**characterized in**
a sealing wall (16), preferably integral with the frame (11), for confining the ion flow (13) to the compartment (K1, K2, K3) by sealing the electrolyte (14).

4. Module (EM, EM1, EM2, EM3, EM4) as per Claim 3
**characterized in**
an air chamber (17) formed between the cathode (12) and anode (15), wherein
the cathode (12) is in fluid communication with the air chamber (17) and the anode (15) is metallic, such that the cell (10) constitutes a metal-air cell (10).

5. Module (EM, EM1, EM2, EM3, EM4) as per Claim 3 or Claim 4 **characterized in**
an air vent (18), preferably arranged opposite the sealing wall (16), for venting the air chamber (17).

6. Module (EM, EM1, EM2, EM3, EM4) as per Claim 5
**characterized in**
a conductive, preferably metallic, grille (19) covering the vent (18) and electrically interconnecting the cathode (12) and the anode (15).

7. Module (EM, EM1, EM2, EM3, EM4) as per Claim 5 or Claim 6 **characterized in that**
the anode (15) is of zinc and the electrolyte (14) is an aqueous alkaline solution, such that the cell (10) constitutes a zinc-air cell (10).

8. Electrochemical cell (10)
**characterized in**
a first module (EM2) and a second module (EM3) as per Claim 5, Claim 6, or Claim 7,
wherein
the compartment (K2) is formed between the first module (EM2) and the second module (EM3) and contains the electrolyte (14) and
the anode (15) of the second module (EM3) faces the cathode (12) of the first module (EM2) and is saturated with the electrolyte (14).

9. Battery
**characterized in**
a container (20), such as a trough,
containing a first cell (10) and a second cell as per Claim 8,
wherein
the second module (EM3) of the first cell (10) constitutes the first module of the second cell, conjoining the cells.

10. Battery as per Claim 9
**characterized in**
a valve for fluidically interconnecting the compartments (K1, K2, K3).

11. Process for manufacturing a battery as per Claim 10,
**characterized in**
inserting the modules (EM1, EM2, EM3, EM4) into the container (20) such that the vents (18) open up outside the container (20) and
charging the container (20) with the electrolyte (14), preferably while the compartments (K1, K2, K3) are interconnected.

12. Use of a battery as per Claim 10
**characterized in that**
the air chambers (17) are vented, supplying the cathodes (12) with oxygen (21) such as from ambient air,
the oxygen (21) oxidizes the electrolyte (14), sustaining the ion flow (13), and the ion flow (13) causes a discharge current through an electrical load while the anodes (15) degenerate.

13. Use of a battery as per Claim 10
**characterized in that**
the battery is supplied with a charge current, such as from a wind turbine or photo-voltaic module (EM, EM1, EM2, EM3, EM4), reversing the ion flow (13) and regenerating the anodes (15).

14. Use as per Claim 12 or Claim 13
**characterized in that**
if one among the cells (10) leaks, the compartments (K1, K2, K3) are interconnected through the valve until the electrolyte (14) is leveled across the container (20).

15. Use as per Claim 12, Claim 13, or Claim 14
**characterized in that**
the battery is stationary.
